**Europäisches Patentamt**

**European Patent Office**

**Office européen des brevets**

(19)

(11) Veröffentlichungsnummer: **0 093 929**
**B1**

## EUROPÄISCHE PATENTSCHRIFT

(12)

(45) Veröffentlichungstag der Patentschrift:
**26.02.86**

(51) Int. Cl.⁴: **H 02 P 7/62,** H 02 P 5/40

(21) Anmeldenummer: **83103996.1**

(22) Anmeldetag: **23.04.83**

(54) **Verfahren zur Steuerung des magnetischen Flusses einer Asynchronmaschine und Einrichtung hierzu.**

(30) Priorität: **29.04.82 DE 3215869**
**10.12.82 DE 3245761**

(43) Veröffentlichungstag der Anmeldung:
**16.11.83 Patentblatt 83/46**

(45) Bekanntmachung des Hinweises auf die Patenterteilung:
**26.02.86 Patentblatt 86/9**

(84) Benannte Vertragsstaaten:
**AT FR GB IT SE**

(56) Entgegenhaltungen.
**EP - A - 0 031 117**
**FR - A - 2 290 781**

**ETZ-A, Band 99, Nr. 4, April 1978 W. FLÜGEL**
**"Erweitertes Verfahren zur dynamisch richtigen**
**Steuerung des Flusses bei der Drehzahlregelung von**
**umrichtergespeisten Asynchronmaschinen", Seiten**
**185-188**

(73) Patentinhaber: **BROWN, BOVERI & CIE**
**Aktiengesellschaft, Kallstadter Strasse 1,**
**D-6800 Mannheim 31 (DE)**

(72) Erfinder: **Kampschulte, Burkhard, Dr. Dr.-Ing.,**
**Wilhelm-Leuschner-Strasse 38, D-6806 Viernheim (DE)**
Erfinder: **Kuhn, Werner, Dipl.-Ing., Eichenstrasse 23,**
**D-6944 Hemsbach (DE)**

(74) Vertreter: **Kempe, Wolfgang, Dr. et al, c/o Brown, Boveri**
**& Cie AG Postfach 351, D-6800 Mannheim 1 (DE)**

## Beschreibung

Die Erfindung bezieht sich auf ein Verfahren zur Steuerund des magnetischen Flusses einer Asynchronmaschine gemäß dem Oberbegriff des Patentanspruchs 1 sowie auf eine Einrichtung hierzu.

Ein solches Verfahren ist aus der DE-OS 24 52 833 bekannt. Bei diesem Verfahren werden Steuerungsmittel eingesetzt, welche aus der als Fürungsgröße für das Drehmoment vorgegebenen Schlupffrequenz und der Drehfrequenz der Asynchronmaschine mit Hilfe von in den,Steuerungsmitteln voreingestellten Kenngrößen der Asynchronmaschine diejenige Amplitude der Ständerspannung und diejenige Ständerfrequenz als Stellgröße für das Speisespannungssystem berechnen, welche bewirken; daß bei schnellen Änderungen der vorgegebenen Schlupf frequenz sich Amplitude und Phasenlage des Läuferflusses der Asynchronmaschine nicht oder nur wenig ändern. Dieses Verfahren mit konstantem magnetischem Fluß in der Asynchronmaschine erfüllt hohe dynamische Anforderungen und erlaubt schnelle Drehmomentänderungen.

Ändert sich jedoch die am Wechselrichter eingangsseitig anliegende Gleichspannung (Spannung im Zwischenkreis eines Umrichters) in Abhängigkeit vom Lastzustand der Asynchronmaschine, so hat das bekannte Verfahren den Nachteil, daß die Ständerfrequenz, bei der die maximale Ständerspannung der Asynchronmaschine erreicht wird, ebenfalls vom Lastzustand abhängt. Die Folge ist, daß entweder die Wechselrichtersteuerung durch die Berücksichtigriung der Lastabhängigkeit aufwendiger wird, oder daß der Wechselrichter und die Asynchronmaschine bei lastunabhängiger Wechselrichtersteuerung wegen der dann auftretenden größeren Oberschwingungströme schlecht ausgenutzt werden. Die großen Oberschwingungsströme ergeben sich deshalb, weil der nach dem Pulsbreitenmodulationsverfahren arbeitende Wechselrichter bei einer variablen Eingangsgleichspannung das Taktverhältnis Taktfrequenz/Ständerfrequenz schon bei kleineren Frequenzen auf den jeweils nächsten, niedrigeren Wert umschalten muß, um auch in der niedrigsten Teillaststufe bei der kleinsten Zwischenkreisspannung die Aussteuerungsgrenze nicht zu überschreiten. Niedrigere Taktverhältnisse bei gleicher Ausgangsfrequenz des Wechselrichters haben jedoch größere Oberschwingungsströme zur Folge.

Der Erfindung liegt die Aufgabe zugrunde, ein Verfahren zur Steuerung des magnetischen Flusses einer Asynchronmaschine der eingangs genannten Art sowie eine Einrichtung hierzu anzugeben, das bzw. die auch bei variabler Eingangsspannung des Wechselrichters eine gute Ausnutzung der Asynchronmaschine und des Wechselrichters ermöglicht.

Diese Aufgriabe wird durch die im Anspruch 1 gekennzeichneten Merkmale gelöst. Einrichtungrien zur Durchführung des Verfahrens nach Anspruch 1 sind in den Unteransprüchen gekennzeichnet.

Die mit der Erfindung erzielbaren Vorteil e bestehen insbesondere darin, daß die Aussteuerungsgrenzen für die verschiedenen Taktverhältnisse des Wechselrichters nahezu unabhängig von der Führungsgröße (Drehmoment) sind und deshalb Asynchronmaschine und Wechselrichter optimal ausgenutzt werden können.

Ausführungsbeispiele der Erfindung sind im folgenden anhand der Zeichnungen erläutert. Es zeigen:

Fig. 1 ein Blockschaltbild des Antriebs- und Regelsystems für einen Drehstromantrieb eines diesel-elektrischen Triebfahrzeuges,

Fig. 2 die Regeleinrichtung für den Wechselrichter,

Fig. 3 Steuerkennlinien für die Schlupffrequenz,

Fig. 4 Steuerkennlinien für den Ständerstrom,

Fig. 5 ein Blockschaltbild des Antriebs- und Regelsystems für einen Drehstromantrieb eines über ein Gleichspannungsnetz gespeisten Triebfahrzeuges.

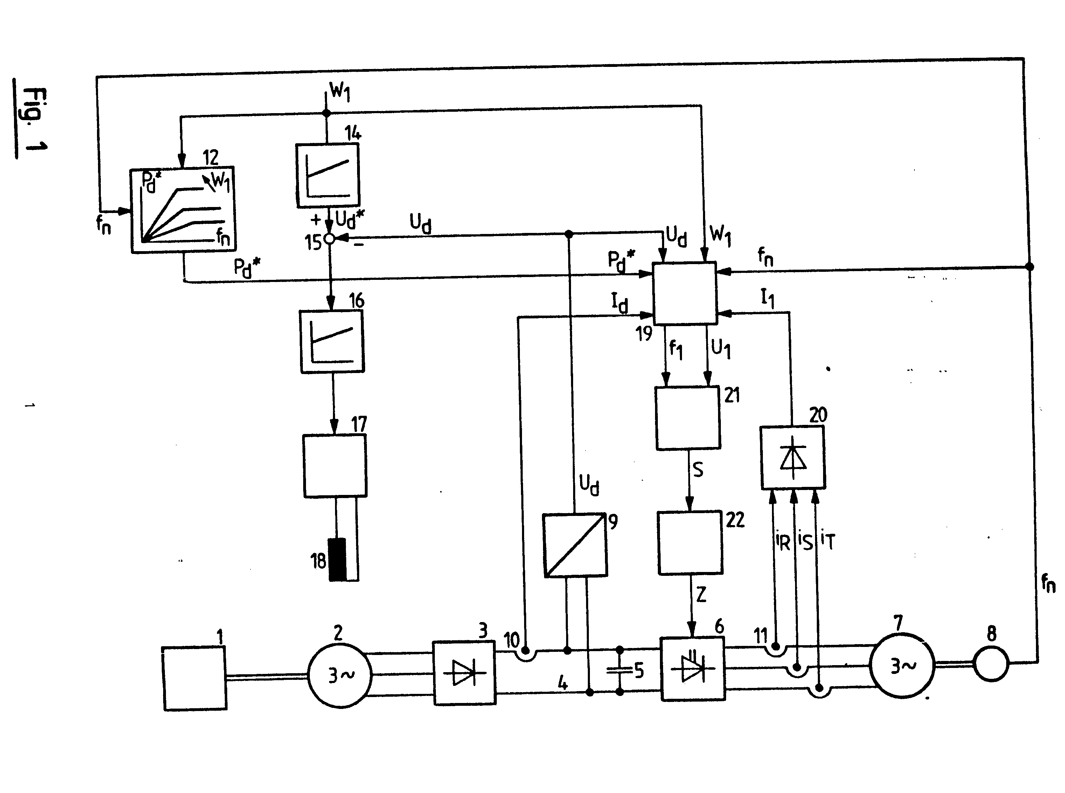

In Fig. 1 ist ein Blockschaltbild des Antriebs- und Pegelsystems für einen Drehstromantrieb eines diesel-elektrischen Triebfahrzeuges dargestellt. Ein drehzahlgeregelter Dieselmotor 1 dient zum Antrieb eines Drehstromgenerators 2. Die vom Generator 2 abgegebene dreiphasige Wechselspannung wird über einen ungesteuerten Gleichrichter 3 gleichgerichtet und einem Gleichspannungszwischenkreis 4 zugeführt. Zwischen den Polen des Gleichspannungszwischenkreises 4 ist ein,Stützkondensator 5 angeordnet. Ein Wechselrichter 6 (Pulswechselrichter) wandelt die Gleichspannung des Zwischenkreises 4 in eine dreiphasige Wechselspannung variabler Frequenz und Amplitude um. Diese Drehspannung dient zur Speisung der Antriebsmaschine(n) des diesel-elektrischen Fahrzeuges, einer (mehrerer) Asynchronmaschine(n) 7.

Zur Ermittlung der Drehfrequenz $f_n$ der Asynchronmaschine 7 ist eine Drehzahlerfassungseinrichtung 8 vorgesehen. Die Zwischenkreisspannung (Istwert) $U_d$ wird mit Hilfe einer Spannungserfassungseinrichtung 9 erfaßt. Zur Messung des Zwischenkreisstromes (Istwert) $I_d$ des Gleichspannungszwischenkreises 4 dient eine Stromerfassungseinrichtung. 10. Die vom Wechselrichter 6 ausgangsseitig abgegebenen Phasenströme $i_R$, $i_S$, $i_T$ werden mit Hilfe von Stromerfassungseinrichtungen 11 ermittelt.

Zur Bildung eines Sollwertes $P_d{}^*$ für die Zwischenkreisleistung ist ein zweidimensionaler Kennliniengeber 12 vorgesehen. Dem Kennliniengeber 12 wird eingangsseitig die Drehfrequenz $f_n$ und eine Führungsgröße $w_1$ vorgegeben. Die Führungsgröße $w_1$ wird vom Lokführer des Triebfahrzeuges vorgegeben und gibt das Verhältnis der abzugebenden Leistung bzw. Drehmoment zur maximal möglichen Leistung bzw. Drehmoment bei der jeweiligen Fahrzeuggeschwindigkeit an. Gegebenenfalls kann die Führungsgröße $w_1$ mittels eines dynamischen Begrenzers (dw1/dt) begrenzt werden.

Zur Regelung der vom Drehstromgenerator 2 abgegebenen Spannung und damit der Zwischenkreisspannung $U_d$ wird die Führungsgröße $w_1$ einem Kennliniengeber 14 zugeleitet. Der Kennliniengeber 14 gibt einen Sollwert $U_d^*$ für die Zwischenkreisspannung $U_d$ in Abhängigkeit von der Füh-rungsgröße $w_1$ an eine Vergleichsstelle 15 ab. Der Vergleichsstelle 15 wird als zweite Eingangsgröße der Istwert $U_d$ der Zwischenkreisspannung zugeführt. Die Vergleichsstelle 15 gibt die Ausgangsgröße $U_d^*$ - $U_d$ an einen Spannungsregler 16 (PI-Regler) ab. Der Spannungsregler 16 beeinflußt ausgangsseitig über ein zwischengeschaltetes Erregergerät 17 die Erregerwicklung 18 des Drehstromgenerators 2.

Zur Regelung des Wechselrichters 6 ist eine Regeleinrichtung 19 vorgesehen, der eingangsseitig die Führungs-größe $w_1$, die Zwischenkreisspannung $U_d$, der Zwischenkreisstrom $I_d$, der Sollwert $P_d^*$ der Zwischenkreisleistung, die Drehfrequenz $f_n$ und der Ständerstrom (Istwert) $I_1$ zugeleitet werden. Zur Ermittlung des Ständerstromes $I_1$ dient ein Gleichrichter 20, dem eingangsseitig die Phasenströme $i_R$, $i_S$, $i_T$ eingegebem werden (Strombetragsbildung). Die Regeleinrichtung 19 liefert ausgangsseitig eine Ständerfrequenz $f_1$ und eine Ständerspannung $U_1$ an eine Drehspannungsquelle 21 zur Bildung eines dreiphasigen Spannungssystems. Die Drehspannungsquelle 21 gibt Schaltbefehle S an einen Steuersatz 22 ab. Der Steuersatz 22 seinerseits liefert Steuerbefehle Z zur Zündung bzw. Löschung der Stromrichterventile an den Wechselrichter 6.

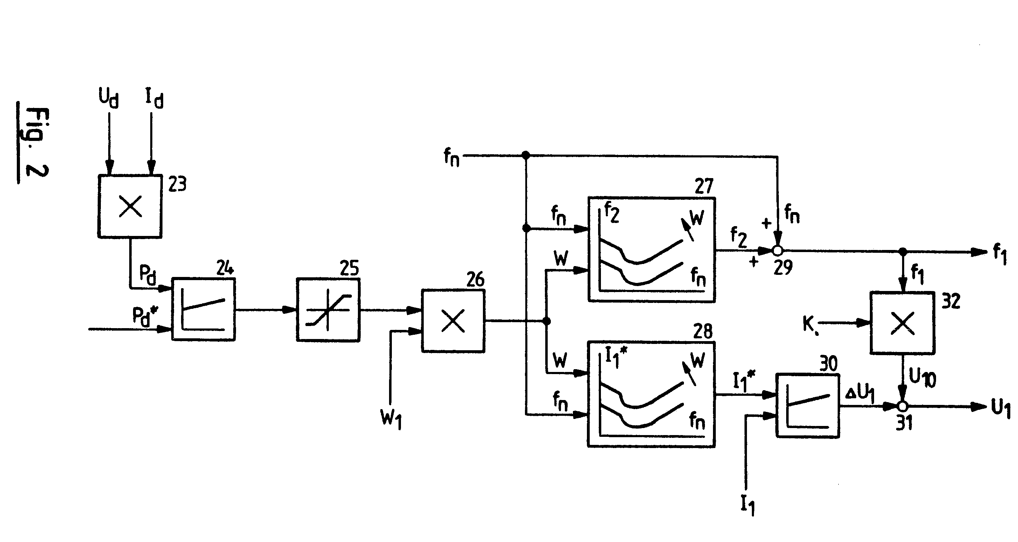

In Fig. 2 ist die Regeleinrichtung 19 für den Wechselrichter 6 im einzelnen dargestellt. Einem Multiplizierer 23 werdem eingangsseitig die Zwischenkreisspannung $U_d$ und der Zwischenkreisstrom $I_d$ zugeführt. Ausgangsseitig gibt der Multiplizierer 23 die Zwischenkreisleistung $P_d$ an einen Leistungsregler 24 ab. Als weitere Eingangs-größe liegt dem Leistungsregler 24 der Sollwert $P_d^*$ der Zwischenkreisleistung an. Ausgangsseitig ist der Leistungsregler 24 über einen Begrenzer 25 mit einem Multiplizierer 26 verbunden. Dem Multiplizierer 26 wird eingangsseitig ferner die Führungsgröße $w_1$ eingegegeben.

Ausgangsseitig gibt der Multiplizierer 26 die mittels des Leistungsreglers 24 korrigierte Führungsgröße w an zwei zwei-dimensionale Kennliniengeber 27, 28 ab. Den beiden Kennliniengebern 27, 28 liegt eingangsseitig fermer die Drehfrequenz $f_n$ an. Der Kennliniengeber 27 gibt ausgangsseitig eine Schlupffrequenz $f_2$ in Abhängigkeit von der Drehfrequenz $f_n$ und der korrigierten

Führungsgröße w an eine Additionsstelle 29 ab. Dieser Additionsstelle 29 liegt desweiteren die Drehfrequenz $f_n$ an. Die Additionsstelle 29 bildet die Ständerfrequenz $f_1 = f_n + f_2$. Die Schlupffrequenz $f_2$ kann zusätzlich mit der Läufertemperatur korrigiert werden, die näherungsweise aus der Messung der Ständertemperatur ermittelt wird.

Der Kennliniengeber 28 gibt ausgangsseitig einen Sollwert $I_1^*$ für den Ständerstrom in Abhängigkeit von der Drehfrequenz $f_n$ und der korrigierten Führungsgröße w an einen Stromregler 30 ab. Als weitere Eingangsgröße wird dem Stromregler 30 der Ständerstrom (Istwert) $I_1$ zugeleitet. Ausgangsseitig gibt der Stromregler 30 einen Wert $\triangle U_1$ an eine Additionsstelle 31 ab.

Die Ständerfrequenz $f_1$ wird einem Multiplizierer 32 zugeleitet. Der Multiplizierer 32 bildet die Leerlaufspannung $U_{10} = k \cdot f_1$, wobei k einen konstanten Faktor darstellt, und gibt diese Größe an die Additionsstelle 31 ab. Der Additionsstelle 31 ist ausgangsseitig die Ständerspannung $U_1 = U_{10} + \triangle U_1$ entmehmbar. Die Ständerspannung $U_1$ wird also ständerfrequenzproportional vorgesteuert und vom Stromregler 30 korrigiert.

Wesentlich für die Funktionsweise der beschriebenem Regeleimrichtung ist, daß die Amplitude des magnetischem Flusses $\Psi$ in der Asynchronmaschine 7 proportional zur Zwischenkreisspannung $U_d$ verändert wird, und zwar indirekt durch Vorgabe entsprechender Werte für die Schlupffrequenz $f_2$ umd dem Ständerstrom $I_1^*$ und folglich entsprechende Werte für die Ständerfrequenz $f_1$ und die Ständerspannung $U_1$. Der Zwischenkreisspannungs-Sollwert $U_d^*$ wird dabei mit Hilfe der Führungsgröße $w_1$ über den Kennliniengeber 14 vorgegeben.

Im Teillastbereich verringert sich der maximal kommutierbare Strom des Wechselrichters 6 proportional zur Zwischenkreisspannung $U_d$. In gleicher Weise werden die Oberschwingungsströme kleiner. Die Grundschwingung des Ständerstromes $I_1$ verringert sich dann bei $U_d$-proportionaler Flußsteuerung wegen der magnetischen Sättigung sogar mehr als porportional, wenn der Spannungsabfall am Ständerwiderstand und an den Streureaktanzen vernachlässigt werden kann. Die Kommutierungssicherheit wird also im Teillastbereich größer.

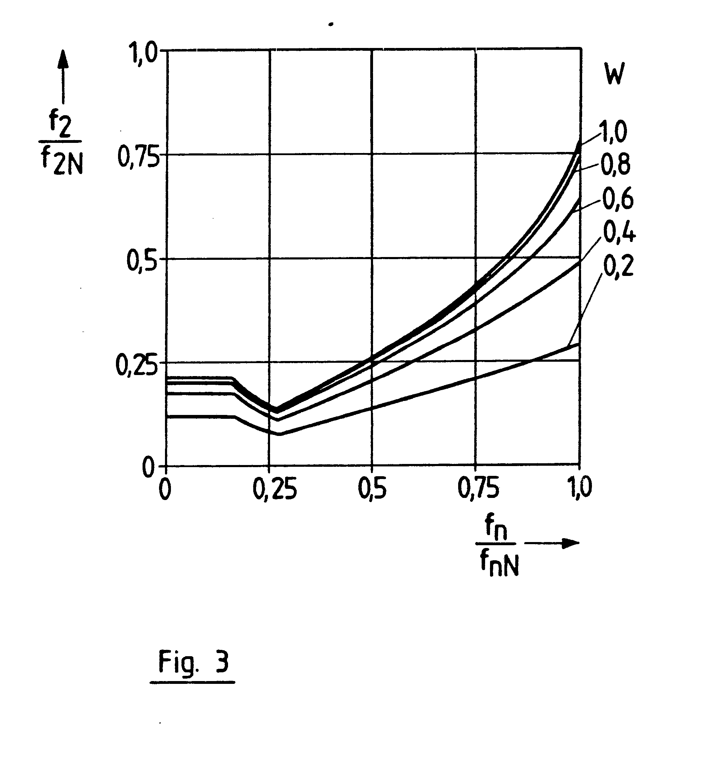

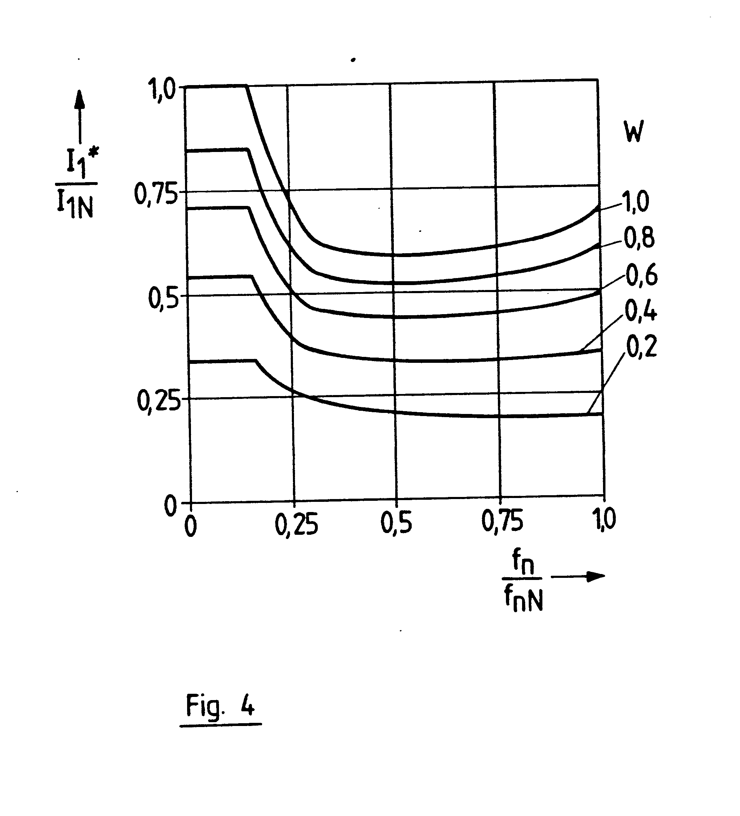

In den Fig. 3 und 4 sind Beispiele der nach diesem Verfahren berechneten Steuerkennlinien für die Schlupffrequenz $f_2$ (zwei-dimensionaler Kennliniengeber 27) und den Ständerstrom-Sollwert $I_1^*$ (zwei-dimensionaler Kennliniengeber 28) in Abhängigkeit der Drehfrequenz $f_n$ und der korrigierten Führungsgröße w dargestellt. Die Schlupffrequenz $f_2$, der Ständerstrom-Sollwert $I_1^*$ und die Drehfrequenz fn sind dabei auf die jeweiligen Nennwerte $f_{2N}$, $I_{1N}$ und $f_{nN}$ bezogen.

w ist die vom Leistungsregler 24 korrigierte Führungs-größe $w_1$. Das üblicherweise geforderte

Zugkraft-Geschwindigkeits-Diagramm für Triebfahrzeuge läßt sich in einen Momentensteuerbereich bei kleinen Geschwindigkeiten und einen Leistungssteuerbereich bei großen Geschwindigkeiten einteilen, in dem für ein konstantes $w_1$ eine konstante Leistung verlangt wird. Im Leistungssteuerbereich wird die Führungsgröße $w_1$ als Leistungssollwert interpretiert und mit der Leistung $P_d$ im Zwischenkreis verglichen. Durch die entsprechende Bewertung von $w_1$ stellt der Leistungsregler 24 die geforderte Leistung ein. Falls eine genauere Regelung der an der Welle abgegebenen Leistung erwünscht ist, können verschiedene Verlustanteile $\Delta P_d^*$ berücksichtigt werden. Im Momentensteuerbereich wird die Führungsgröße $W_1$ als Drehmomentsollwert interpretiert. Dieser muß durch Multiplikation mit der Drehfrequenz $f_n$ in den Leistungssollwert $P_d^*$ umgerechnet werden, damit der Leistungsregler 24 richtig arbeiten kann. Im Unterschwingungsbereich ist das Eingreifen des Leistungsreglers 24 jedoch nicht unbedingt notwendig. Will man den Regler 24 in diesem Bereich sperren, so ist das durch die Vorgabe eines zu großen Leistungsollwertes $P_d^*$ leicht möglich: der Regler 24 läuft dann an seine obere Begrenzung und wird unwirksam.

Im Unterschwingungsbereich ist der Stromregler 30 im Eingriff. Bei Übergang im den Feldschwächbereich hat der Stromregler 30 keine Spannungsstellreserve mehr. Er läuft an seine obere Begrenzung und ist nicht mehr wirksam. Spätestens zu diesem Zeitpunkt muß der Leistungsregler 24 freigegeben sein.

Der Vorteil des multiplikativen Leistungsregler-Eingriffs zeigt sich, wenn der Feldschwächbereich erst mit oder nach dem Übergang in den Leistungssteuerbereich beginnt. In diesem Fall kann auf die Vorgabe des Leistungssollwertes $P_d^*$ verzichtet werden. Der Leistungsregler 24 erhält direkt die Führungsgröße $W_1$, die im Momentsteuerbereich größer als der entsprechende Leistungssollwert $P_d^*$ ist. Der Leistungsregler 24 liegt an seiner oberen Begrenzung und die korrigierte Führungs-größe $W$ ist gleich $W_1$. Erst im Leistungssteuerbereich, wenn die Führungsgröße $W_1$ als Leistungssollwert $P_d^*$ interpretiert werden kann, beginmt der Leistungsregler 24 zu arbeiten. Bei einem additiven Eingriff des Reglers 24 wäre diese selbsttäige Freigabe ohne schaltbaret Reglersperre nicht möglich.

Das beschriebene Verfahren kann auch für Antriebe verwendet werden, bei denen sich die Zwischenkreisspannung $U_d$ unabhängig vom Fahrsollwert eines Triebfahrzeuges ändert, z.B. für Fahrdrahtlokomotiven, die aus einem schwachen Gleichspannungsnetz gespeist werden.

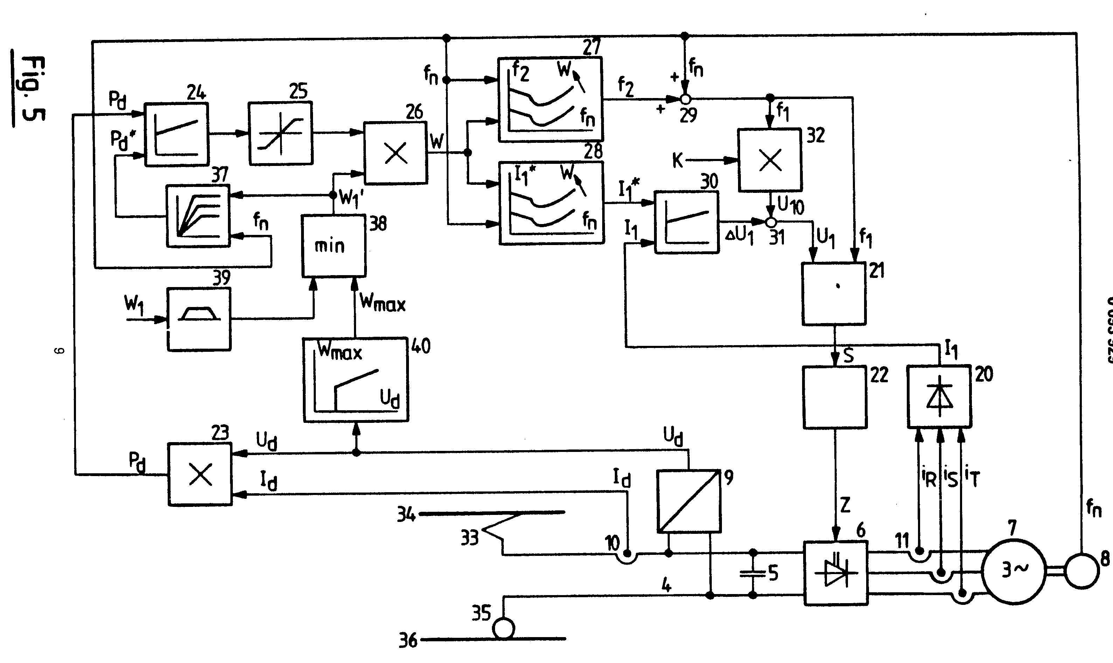

In Fig. 5 ist für dieses Ausführungsbeispiel das Blockschaltbild des Antriebs- und Regelsystems für einen Drehstromantrieb eines über ein Gleichspannungsnetz gespeisten Triebfahrzeuges dargestellt. Die aus Gleichspannungszwischenkreis 4, Stützkondensator 5, Wechselrichter 6, Asynchronmaschine 7, Drehzahlerfassungseinrichtung 8 für die Drehfrequenz $f_n$, Spannungserfassungseinrichtung 9 für die Zwischenkreisspannung $U_d$, Stromerfassungseinrichtung 10 für den Zwischenkreisstrom $I_d$ und Stromerfassungseinrichtungen 11 für die Phasenströme $i_R$, $i_S$, $i_T$ bestehende Anordnung ist wie unter Fig. 1 beschrieben. Der Gleichspannungszwischenkreis 4 wird jedoch nicht mehr von einem mittels eines Drehstrommotors angetriebenen Drehstromgenerator mit nachgeschaltetem Gleichrichter gespeist, sondern von einem Gleichspannungsnetz. Über einen Bügel 33 wird der am Fahrdraht 34 liegende Pluspol des Gleichspannungsnetzes abgegriffen, während der Minuspol über Räder 35 an der Schiene 36 abgreifbar ist.

Wie unter Fig. 1 beschrieben, sind ein Gleichrichter 20 zur Ermittlung des Ständerstromes $I_1$, eine Drehspannungsquelle 21 zur Abgabe der Schaltbefehle S, sowie ein Steuersatz 22 zur Abgabe der Steuerbefehle Z vorgesehen. Zur Ermittlung der Zwischenkreisleistung $P_d$ dient ein Multiplizierer 23, wie unter Fig. 2 beschrieben. Der Leistungs-Istwert $P_d$ wird wiederum einem Leistungsregler 24 mit nachgeschaltetem Begrenzer 25 und Multiplizierer 26 zur Ermittlung der korrigierten Führungsgröße $W$ zuge führt.

Dem Multiplizierer 26 wird als zweite Eingangsgröße jedoch abweichend zur Regeleinrichtung gemäß Fig. 2 ein Wert $W_1$, zugeleitet. Dieser Wert $W_1$, wird desweiteren einem zwei-dimensionalen Kennliniengeber 37 zugeführt, dem als weitere Eingangsgröße die Drehfrequenz $f_n$ anliegt. Der Kennliniengeber 37 gibt ausgangsseitig einen Leistungs-Sollwert $P_d^*$ an den Leistungsregler 24 in Abhängigkeit von $W_1$, und $f_n$ ab.

Der Wert $W_1$, ist das Ausgangssignal eines Kleinstwertausv·gliedes 38, dem eingangsseitig über einen dyna·schen Begrenzer (d$w_1$/dt) 39 die Führungsgröße $W_1$ sowie direkt ein Wert $W_{max}$ anliegen. Der Wert $W_{max}$ entspricht dem zulässigen, von der Zwischenkreisspannung $U_d$ abhängigen Maximalwert der Fülhrungsgröße $W_1$ und wird durch einen Kennliniengeber 40 ermittelt, dem eingangsseitig die Zwischenkreisspannung $U_d$ ( = Fahrdrahtspannung) zugeführt wird.

Die weitere Verarbeitung der korrigierten Führungsgröße $W$ in der Regeleinrichtung mit Hilfe der zwei-dimensionalen Kennliniengeber 27 und 28, der Additionsstelle 29, dem Stromregler 30, der Additionsstelle 31 und dem Multiplizierer 32 ist wiederum wie unter Fig. 2 beschrieben. Ausgangsseitig gibt die Regeleinrichtung ebenfalls die Ständerspannung $U_1$ und die Ständerfrequenz $f_1$ an die Drehspannungsquelle 21 ab.

Im Unterschied zum Ausführungsbeispiel gemäß Fig. 1/2 ist beim Ausführungsbeispiel gemäß Fig. 5 die Zwischenkreisspannung Ud eine unabhängige und die maximal vorgebbare Führungsgröße $W_1$ eine abhängige Größe. Der Kennliniengeber 40 legt dabei fest, welche maximale Führungsgröße $W_{max}$ dabei je nach vorliegender Zwischenkreisspannung $U_d$ zulässig ist. Ist die tatsächlich vorgegebene Führungsgröße $W_1$ kleiner als die maximal vorgebbare Führungsgröße $W_{max}$, so wird $W_1$ an den Multiplizierer 26 und den Kennliniengeber 37 durchgeschaltet. Ist die vorgegebene Führungsgröße $W_1$ jedoch größer als die maximal vorgebbare Führungsgröße $W_{max}$ so wird letztere weitergegeben.

**Patentansprüche:**

1. Verfahren zur Steuerung des magnetischen Flusses einer Asynchronmaschine, die aus einem Wechselrichter mit einer mehrphasigen Spannung einstellbarer Frequenz und Amplitude gespeist wird, und die Steuerbefehle für den Wechselrichter von Signalen abgeleitet werden, die die Ständerspannung und die Standerfrequenz darstellen, wobei die Ständerfrequenz durch Summation von Schlupffrequenz und ermittelter Drehfrequenz der Asynchronmaschine ermittelt werden, <u>dadurch gekennzeichnet,</u> daß zur Erzielung einer proportionalen Abhängigkeit des magnetischen Flusses in der Asynchronmaschine von der am Wechselrichter eingangsseitig anliegenden Gleichspannung ($U_d$), diese nach multiplikativer Verknüpfung mit dem Zwischenkreisstrom ($I_d$) und nach Verarbeitung in einem Leistungsregler (24) zur Korrektur der Führungsgröße dient, welche jeweils zusammen mit der Drehfrequenz ( $f_n$) der Asynchronmaschine zwei Kennliniengebern (27,28) zur Bildung von Schlupffrequenz ( $f_2$) und Ständerstromsollwert ($I_1{}^*$) zugeführt ist.

2. Einrichtung zur Durchführung des Verfahrens nach Anspruch 1, bei der eine Steuereinrichtung zur Bildung von Steuerbefehlen für den Wechselrichter vorgesehen ist, der eingangsseitig Werte für die Standerspannung und die Standerfrequenz anliegen, wobei die Ständerfrequenz durch Summation von Schlupffrequenz und ermittelter Drehfrequenz der Asynchronmaschine gewonnen wird, dadurch gekennzeichnet, daß zwei-dimensionale Kennliniengeber (27, 28) zur Bildung der Schlupffrequenz ( $f_2$) und eines Ständerstrom-Sollwertes ($I_1{}^*$) in Abhängigkeit von der Drehfrequenz ( $f_n$) und einer durch das Ausgangssignal eines Reglers (24) zur Regelung der dem Wechselrichter (6) zugeführten Leistung ($P_d$) korrigierten vorgegebenen Führungsgröße (W) vorgesehen sind.

3. Einrichtung nach Anspruch 2, dadurch gekennzeichnet, daß der Standerstrom-Sollwert

($I_d{}^*$ ) einem Stromregler (30) zugeleitet wird, dessen weitere Ein-gangsgröße der gemessene Ständerstrom ($I_1$) ist und dessen Ausgangsgröße mit einem standerfrequenzproportionalen Zusatzsignal zur Standerspannung ($U_1$) addiert wird.

4. Einrichtung nach Anspruch 3, dadurch gekennzeichnet, daß die korrigierte vorgegebene Führungsgröße (W) als Produkt eines Multiplizierers (26) gebildet wird, dem eingangsseitig eine Führungsgröße ($W_1, W_{1*}$) anliegt.

5. Einrichtung nach Anspruch 4, dadurch gekennzeichnet, daß der dem Leistungsregler ( 14) zugeführte Leistungssollwert ($P_d{}^*$) mittels eines zwei-dimensionalen Kennliniengebers ( 12, 37) in Abhängigkeit der Führungs-größe ($W_1, W_1'$) und der Drehfrequenz ($f_n$) gebildet wird.

6. Einrichtung nach Anspruch 5, dadurch gekennzeichnet, daß die Führungsgröße ($W_1'$) als Ausgangssignal eines Kleinstwertauswahlgliedes (38) ermittelt wird, dem eingangsseitig eine vorgegebene Führungsgröße ($W_1$) sowie eine in Abhangigkeit der am Wechselrichter anstehenden Gleichspannung ($U_d$) gebildete maximal möglichen Füh-rungsgröße ($W_{max}$) zugeleitet werden.

**Claims:**

1. Method for controlling the magnetic flux of an asynchronous machine which is fed from an inverter with a multi-phase voltage of adjustable frequency and amplitude, and in which the control commands for the inverter are derived from signals representing the stator voltage and the stator frequency, in which arrangement the stator frequency is determined by summing the slip frequency and determined frequency of rotation of the asynchronous machine, characterised in that for achieving a proportional dependence of the magnetic flux in the asynchronous machine on the direct voltage ($U_d$) present at the input of the inverter, this direct voltage is used after multiplicative combination with the intermediate circuit current ($I_d$) and after processing in an output regulator (24), for correcting the command variable, which is in each case supplied, together with the frequency of rotation ($f_n$) of the asynchrones machine, to two characteristic-curvegenerators (27, 28) for forming the slip frequency ($f_2$) and nominal stator current value ($I_1{}^*$).

2. Device for carrying out the method according to Claim 1, in which a control device for forming control commands for the inverter is provided, at the input of which device values for the stator voltage and the stator frequency are present, in which arrangement the stator frequency is obtained by summing the slip frequency and determined frequency of rotation of the asynchrones machine, characterised in that twodimensional characteristic-curve-generators

(27,28) are provided for forming the slip frequency ($f_2$) and a nominal stator current value ($I_1^*$) as a function of the frequency of rotation ($f_1$) and of a predetermined command variable (W), corrected by the output signal of a regulator (24) for regulating the output power ($P_d$) supplied to the inverter (6).

3. Device according to Claim 2, characterised in that the nominal stator current value ($I_d^*$) is supplied to a current regulator (30), the further input variable of which is the measured stator current ($I_1$) and the output value of which is added, together with an additional signal proportional to the stator frequency, to the stator voltage ($U_1$).

4. Device according to Claim 3, characterised in that the corrective pledetermined command variable (W) is formed as the product of a multiplier (26) at the input of which a command variable ($W_1, W_1$) is present.

5. Device according to Claim 4, characterised in that the nominal power value ($P_d^*$) supplied to the output regulator (14) is formed by means of a twodimensional characteristic-curve generator (12,37) as a function of the command variable ($W_1, W_1'$) and of the frequency of rotation ($f_n$).

6. Device according to Claim 5, characterised in that the command variable ($W_1'$) is determined as the output signal of a minimum-value selection section (38) the input of which is supplied with a predetermined command variable ($W_1$) and with a maximum possible command variable ($W_{max}$) formed as a function of the direct voltage ($U_d$) present at the inverter.

## Revendications

1. Procédé pour commander le flux magnétique d'une machine asynchrone à laquelle un onduleur fournit une tension polyphasée dont l'amplitude et la fréquence sont réglables, les ordres de commande pour l'onduleur étant dérivés de signaux qui représentent la tension et la fréquence statoriques, la fréquence statorique étant déterminée par sommation de la fréquence de glissement et de la fréquence de rotation déterminée de la machine asynchrone, caractérisé en ce que, pour obtenir que le flux magnétique dans la machine asynchrone dépende proportionnellement de la tension continue ($U_d$) présente au côté entrée de l'onduleur, cette tension continue sert, après combinaison multiplicative avec le courant du circuit intermediaire ($I_d$) et traitement dans un régulateur de puissance (24), à corriger la grandeur de référence, laquelle est à chaque fois transmise, conjointement à la fréquence de rotation ($f_n$) de la machine asynchrone, à deux transmetteurs (27,28) de courbes caractéristiques pour former la fréquence de glissement ($f_2$) et la valeur de consigne du courant statorique ($I_1^*$).

2. Dispositif de mise en oeuvre du procédé selon la revendication 1, dans lequel il est prévu, pour former des ondres de commande pour l'onduleur, un dispositif de commande auquel sont appliquées, côté entrée, des valeurs pour la tension et la fréquence statoriques, la fréquence statorique étant obtenue par sommation de la fréquence glissement et de la fréquence de rotation déterminée de la machine asynchrone, caractérisé en ce que deux transmetteurs (27,28) de courbes caractéristiques bidimensionnelles, sont prévus pour former la fréquence de glissement ($f_2$) et une valeur de consigne de courant statorique ($I_1^*$) en fonction de la fréquence de rotation ($f_n$) et d'une grandeur de référence (W) donnée corrigée par le signal de sortie d'un régulateur (24) pour réguler la auissance ($P_d$) transmise à l'onduleur (6).

3. Dispositif selon la revendication 2, caractérisé en ce que la valeur de consigne du courant statorique ($I_d^*$) est transmise à un régulateur de courant (30) dont l'autre grandeur d'entrée est le courant statorique mesure ($I_1$) et dont la grandeur de sortie est additionnée à un signal supplémentaire, proportionnel à la fréquence statorique, pour donner la tension statorique ($U_1$).

4. Dispositif selon la revendication 3, caractérisé en ce que la grandeur de reférence (W) corrigée donnée est-formée en tant que produit d'un multiplicateur (26) au côte entrée duquel est appliquée une grandeur de reférence ($W_1, W_1'$).

5. Dispositif selon la revendication 4, caractérisé en ce que la valeur de consigne de puissance ($P_d^*$) transmise au régulateur de puissance (14) est formée au moyen d'un transmetteur (12,37) de courbes caractéristiques bidimensionnelles, en fonction de la grandeur de référence ($W_1, W_1$,) et de la fréquence de rotation ($f_n$).

6. Dispositif selon la revendication 5, caractérisé en ce que la grandeur de référence ($W_1$,) est déterminée en tant que signal de sortie d'un organe sélecteur de minimum (38) au côté entrée duquel sont amenées une grandeur de référence donnée ($W_1$) ainsi qu'une grandeur de référence maximale possible ($W_{max}$) formée en fonction de la tension continue ($U_d$) appliquée à l'onduleur.

Fig. 1

Fig. 2

Fig. 3

Fig. 4

**Fig. 5**